(19) Europäisches Patentamt
European Patent Office
Office européen des brevets

(11) **EP 2 533 409 A1**

(12) **EUROPÄISCHE PATENTANMELDUNG**

(43) Veröffentlichungstag:
**12.12.2012 Patentblatt 2012/50**

(51) Int Cl.:
*H02M 5/458* (2006.01)      *H02M 1/36* (2007.01)

(21) Anmeldenummer: **11169490.7**

(22) Anmeldetag: **10.06.2011**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME** | (71) Anmelder: **SIEMENS AKTIENGESELLSCHAFT**<br>**80333 München (DE)**<br><br>(72) Erfinder: **Stadter, Norbert**<br>**96155 Buttenheim (DE)** |

(54) **Frequenzumrichter mit einer Strombegrenzungseinrichtung und Verfahren zum Betreiben desselben**

(57)      Bei einem Frequenzrichter (24) können unterschiedliche Wechselrichter an Stromschienen (ZK+, ZK-) eines Zwischenkreises (36) angeschlossen werden. Dies kann auch nachträglich von einem Benutzer des Frequenzumrichters (24) durchgeführt werden. Hierbei kann es zu Fehlern bei der Verschaltung kommen. Beispielsweise kann in dem Zwischenkreis (36) ein Kurzschluss verursacht werden. Dies kann zu einer Überhitzung von Komponenten des Frequenzumrichters (24) beim Aufladen eines Zwischenkreiskondensators (38) führen. Es ist Aufgabe der vorliegenden Erfindung, für einen Frequenzumrichter (24) einen ausreichenden Schutz für dessen Komponenten bereitzustellen. Bei dem erfindungsgemäßen Frequenzumrichter (24) ist eine Strombegrenzungseinrichtung (44) bereitgestellt, mittels welcher eine Stromstärke eines aus einem Versorgungs-Netz (14) in den Zwischenkreis (36) fließenden Stroms ($I_{ZK}$) begrenzt wird. Die Strombegrenzungseinrichtung (44) ist dabei dazu ausgelegt, den Zwischenkreis (36) zum Begrenzen des Stromes ($I_{ZK}$) mit einem Netzanschluss (26) kapazitiv zu koppeln, beispielsweise über Kondensatoren ($C_1$, $C_2$, $C_3$).

FIG 2

EP 2 533 409 A1

**Beschreibung**

Die Erfindung betrifft einen Frequenzumrichter zum Betreiben einer elektrischen Maschine an einem elektrischen Versorgungsnetz. Der Frequenzumrichter weist einen Gleichrichter auf, mit dem eine Wechselspannung des Netzes in eine gleichgerichtete Spannung umgewandelt werden kann. An einem Gleichspannungs-Ausgang des Gleichrichters ist ein Zwischenkreiskondensator angeschlossen. Dieser kann mit einem Strom aus dem Netz aufgeladen werden, wobei eine Stromstärke des Aufladestroms mittels einer Strombegrenzungseinrichtung begrenzt wird.

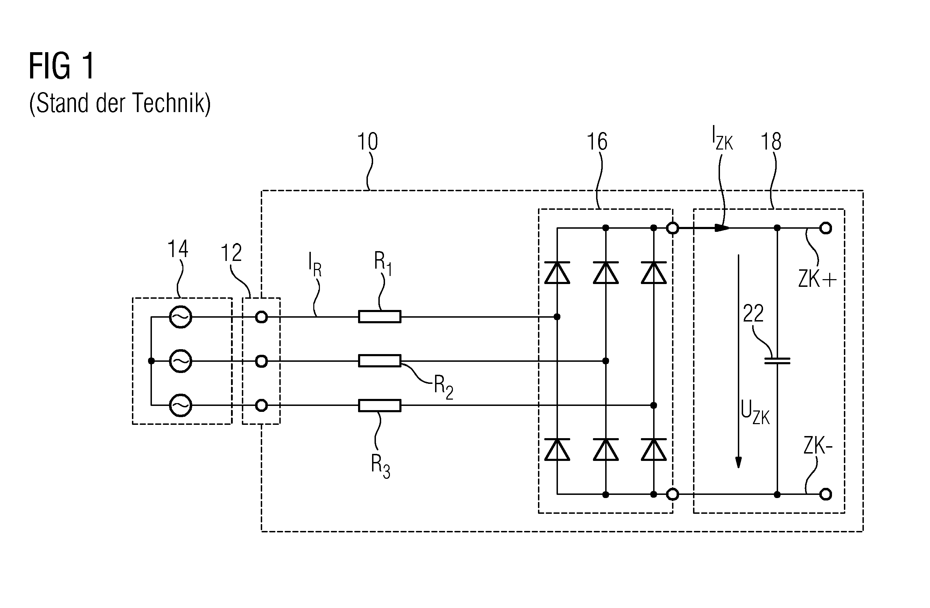

Die prinzipielle Funktionsweise eines Frequenzumrichters der genannten Art ist im Folgenden anhand des in FIG 1 gezeigten Blockschaltbildes näher erläutert. Der gezeigte Frequenzumrichter 10 weist einen Netzanschluss 12 auf. Mittels diesem ist der Frequenzumrichter über ein (nicht dargestelltes) Hauptschütz an ein elektrisches Versorgungsnetz oder kurz Netz 14 angeschlossen. Das Netz 14 kann beispielsweise ein dreiphasiges Drehstromnetz (z.B. 400 V, 50 Hz oder 60 Hz) sein.

Der Frequenzumrichter 10 weist einen Gleichrichter 16 auf, der die Netz-Wechselspannungen in eine gleichgerichtete Spannung umwandelt, die hier als Gleichspannung $U_{ZK}$ bezeichnet ist. An einem Gleichspannungs-Ausgang des Gleichrichters 16 sind Stromschienen ZK+, ZK- eines Zwischenkreises 18 angeschlossen.

An die Stromschienen ZK+, ZK- können ein oder mehrere Wechselrichter angeschlossen sein, was in FIG 1 der Übersichtlichkeit halber nicht dargestellt ist. Mittels eines solchen Wechselrichters kann aus der Gleichspannung $U_{ZK}$ in einem zweiten Wandlungsschritt eine Wechselspannung zum Betreiben einer elektrischen Maschine erzeugt werden. Die Frequenz dieser Wechselspannung kann dabei über den Wechselrichter eingestellt werden.

In dem Zwischenkreis 18 ist durch zumindest einen Zwischenkreiskondensator 22 eine Zwischenkreiskapazität bereitgestellt, durch welche die Gleichspannung $U_{ZK}$ geglättet wird. Unter einer Zwischenkreiskapazität wird hier eine elektrische Kapazität verstanden, die groß genug ist, um eine bei der beschriebenen Wandlung durch den Gleichrichter 16 erzeugte Welligkeit der Gleichspannung $U_{ZK}$ so weit zu glätten, dass sie den zweiten Wandlungsschritt nicht beeinflusst. Bevorzugt ist die Zwischenkreiskapazität auch groß genug, um bei einem kurzzeitigen Ausfall der Netz-Wechselspannung für einige Millisekunden einen unterbrechungsfreien Betrieb einer elektrischen Maschine zu ermöglichen.

Um eine elektrische Maschine mittels des Frequenzumrichters 10 zu betreiben, wird das erwähnte Hauptschütz geschlossen. Der Gleichrichter erzeugt daraufhin die Gleichspannung $U_{ZK}$ wodurch der Zwischenkreiskondensator 22 aufgeladen wird. Dieser Ladevorgang wird im Folgenden als Vorladephase oder als Vorladen des Zwischenkreiskondensators bezeichnet.

Nachdem der Zwischenkreiskondensator 20 so weit aufgeladen ist, dass die Gleichspannung $U_{ZK}$ einen gewünschten Spannungswert erreicht hat, kann eine elektrische Maschine betrieben werden. Dazu erzeugt ein Wechselrichter des Frequenzumrichters aus der Gleichspannung $U_{ZK}$ eine Wechselspannung, durch welche ein Drehstrom in der elektrischen Maschinen erzeugt wird. Dieser Vorgang ist im Folgenden als Betriebsphase bezeichnet.

Vor dem Schließen des Hauptschützes ist der Zwischenkreiskondensator 22 in der Regel ungeladen. In der Vorladephase ergibt sich hierdurch das Problem, dass nach dem Schließen des Hauptschützes die Stromstärke des vom Netz 14 in den ungeladenen Zwischenkreiskondensator 22 fließenden Aufladestroms aufgrund der großen Kapazität des Zwischenkreiskondensators so groß werden kann, dass Komponenten des Gleichrichters 16 beschädigt werden.

Bei dem Frequenzumrichter 10 sind deshalb die in einzelnen Netzphasenleitern des Frequenzumrichters 10 fließenden Aufladeströme durch Vorladewiderstände $R_1$, $R_2$, $R_3$ geführt. Diese bewirken zusammen eine Strombegrenzung. Die Vorladewiderstände $R_1$, $R_2$, $R_3$ können beispielsweise temperaturabhängige PTC-Widerstände (PTC - Positive temperature coefficient) sein.

Bei dem Frequenzrichter 10 können unterschiedliche Wechselrichter an die Stromschienen ZK+, ZK- des Zwischenkreises 18 angeschlossen werden. Dies kann auch nachträglich von einem Benutzer des Frequenzumrichters 10 durchgeführt werden. Hierbei kann es zu Fehlern bei der Verschaltung kommen. Beispielsweise kann in dem Zwischenkreis 18 oder in einer über einen Wechselrichter mit diesem verbundenen elektrischen Maschine ein Kurzschluss verursacht werden. Nach dem Schließen des Hauptschützes fließt dann in der Vorladephase ein Kurzschlussstrom, dessen Stromstärke nur durch die Vorladewiderstände $R_1$, $R_2$, $R_3$ begrenzt ist. Anders als beim Aufladen des Zwischenkreiskondensators 22 fließt der Kurzschlussstrom aber dauerhaft mit der Kurzschlussstromstärke. Durch eine in den Vorladewiderständen $R_1$, $R_2$, $R_3$ umgesetzte Verlustleistung können diese dabei stark erhitzt und schließlich zerstört werden.

Es ist Aufgabe der vorliegenden Erfindung, für einen Frequenzumrichter der beschriebenen Art einen ausreichenden Schutz für dessen Komponenten bereitzustellen.

Die Aufgabe wird durch einen Frequenzumrichter gemäß Patentanspruch 1 und ein Verfahren gemäß Patentanspruch 7 gelöst. Vorteilhafte Weiterbildungen des erfindungsgemäßen Frequenzumrichters und des erfindungsgemäßen Verfahrens sind durch die Unteransprüche gegeben.

Der erfindungsgemäße Frequenzumrichter dient zum Betreiben einer elektrischen Maschine an einem elektrischen Netz. Er weist wie der gattungsgemäße Frequenzumrichter einen Gleichrichter auf, an dessen Gleichspannungs-Ausgang ein Zwischenkreis mit zumindest einem Zwischenkreiskondensator angeschlossen ist.

Bei dem erfindungsgemäßen Frequenzumrichter ist eine Strombegrenzungseinrichtung bereitgestellt, mittels welcher eine Stromstärke eines aus dem Netz in den Zwischenkreis fließenden Stroms begrenzt werden kann. Die Strombegrenzungseinrichtung ist dabei dazu ausgelegt, den Zwischenkreis zum Begrenzen des Stromes mit dem Netzanschluss kapazitiv zu koppeln. Um den Zwischenkreiskondensator in einer Vorladephase mit einem in der Stromstärke begrenzten Aufladestrom aufzuladen, wird der Zwischenkreiskondensator also kapazitiv mit dem Netz gekoppelt. Durch die Impedanz des Koppelkondensators wird die Stromstärke des Aufladestroms des Zwischenkreiskondensators in der Vorladephase begrenzt.

Der erfindungsgemäße Frequenzumrichter weist zudem den Vorteil auf, dass auch ein Kurzschluss am Gleichspannungs-Ausgang nicht zu einer Überhitzung der Strombegrenzungseinrichtung führt. Dennoch kann die Stromstärke eines Kurzschlussstroms und erst recht diejenige eines Aufladestroms wirksam begrenzt werden. Damit sind die Komponenten des Gleichrichters stets wirksam vor einer thermischen Zerstörung durch einen Überstrom geschützt.

In einer vorteilhaften Ausgestaltung des erfindungsgemäßen Frequenzumrichters weist die Strombegrenzungseinrichtung zumindest einen Koppelkondensator auf. Sie ist dabei dazu ausgelegt, zur Strombegrenzung den zumindest einen Koppelkondensator in Serie zwischen ein Anschlusselement des Netzanschlusses und einen Anschluss des Zwischenkreiskondensators zu schalten. Der Aufladestrom des Zwischenkreiskondensators ist (vor der Gleichrichtung) ein Wechselstrom und fließt somit über den Koppelkondensator. Diese kapazitive Kopplung unterscheidet sich damit vollständig von einer kapazitiven Kopplung, wie sie aus dem Stand der Technik zur Filterung von Oberwellen der Netzspannung bekannt sind. Bei dieser sind Filterkondensatoren zwischen Netzphasenleiter des Frequenzumrichters geschaltet, und nicht in Serie, wie der Koppelkondensator.

Unter einem Koppelkondensator ist hierbei ein Kondensator zu verstehen, dessen Kapazität derart gewählt ist, dass sich für die Frequenz der Netzwechselspannung ein Wert der Impedanz des Koppelkondensators ergibt, der eine Begrenzung des Stromes auf einen gewünschten Höchstwert ergibt. Die Verwendung eines in Serie geschalteten Koppelkondensators ermöglicht dabei eine kostengünstige Herstellung des erfindungsgemäßen Frequenzumrichters. Als Alternative zu einem separaten Koppelkondensator ist auch eine besondere Ausgestaltung des Zwischenkreiskondensators selbst denkbar.

Die Strombegrenzungseinrichtung kann bei dem erfindungsgemäßen Frequenzumrichter wahlweise überbrückbar sein. In einer Betriebsphase zum Betreiben einer elektrischen Maschine kann dann (zusätzlich zur oder anstelle der kapazitiven Kopplung) eine niederohmige galvanische Verbindung zwischen dem Zwischenkreiskondensator und dem Netz bereitgestellt werden. Dadurch ergibt sich der Vorteil, dass eine Verlustleistung während der Betriebsphase verringert werden kann. Der Begriff "wahlweise" bedeutet hier, dass die Überbrückung von einem Steuersignal einer Steuereinrichtung oder von einem Betriebszustand des Frequenzumrichters abhängig gemacht werden kann. Zum Überbrücken kann beispielsweise ein Schütz verwendet werden, das der Schutzeinrichtung parallel geschaltet ist.

Anstatt die Strombegrenzungseinrichtung vollständig zu überbrücken, kann auch vorgesehen sein, diese nur zu einem Teil zu überbrücken. Der dann noch im Schaltkreis wirkende Teil kann dann in der Betriebsphase eine andere Funktion übernehmen, z.B. eine Filterung einer Wechselspannung. Durch diese doppelte Verwendung lassen sich Bauteile einsparen und damit Herstellungskosten verringern.

Die Strombegrenzungseinrichtung kann zwischen den Netzanschluss und den Gleichrichter geschaltet sein. Dadurch ergibt sich der Vorteil, dass zum Gleichrichten des Aufladestromes in der Vorladephase derselbe Gleichrichter genutzt werden kann wie zum Gleichrichten eines Laststromes in der Betriebsphase.

Der erfindungsgemäße Frequenzumrichter kann auch einen weiteren Gleichrichter aufweisen, der dann Bestandteil der Strombegrenzungseinrichtung ist. Dann ergibt sich der Vorteil, dass die Strombegrenzungseinrichtung nicht überbrückt werden muss, um die Verlustleistung in der Betriebsphase zu verringern.

Bei einer weiteren Ausführungsform des erfindungsgemäßen Frequenzumrichters weist die Strombegrenzungseinrichtung eine Schalteinrichtung für Koppelkondensatoren auf. Mittels dieser können Koppelkondensatoren zwischen Netzphasenleiter des Frequenzumrichters geschaltet werden. Die Koppelkondensatoren können so in der Betriebsphase als Filterkondensatoren fungieren. Die Koppelkondensatoren sind nach dem umschalten also nicht in Serie zwischen ein Netzanschlusselement und einen Anschlüssen des Zwischenkreiskondensators geschaltet, wie in der Vorladephase, sondern es werden immer zwei Netzanschlusselemente miteinander verbunden. Sie können hierbei z.B. in einer Stern- oder Dreieckschaltung miteinander verschaltet sein.

Die Strombegrenzungseinrichtung eignet sich auch dazu, den Frequenzumrichter während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von dem Gleichrichter aus dem Netz empfangenen elektrischen Leistungsflusses. Wenn der Leistungsfluss dann wieder einsetzt, kann der Zwischenkreiskondensator nahezu vollständig entladen sein, so dass sein Aufladestrom wieder entsprechend groß ist. Gemäß einer Weiterbildung des erfindungsgemäßen Verfahrens wird deshalb zum Wiederaufladen des Zwischenkreiskondensators in einer Nachladephase eine Stromstärke des Aufladestroms mittels der Strombegrenzungseinrichtung begrenzt.

Im Folgenden wird die Erfindung anhand von Ausführungsbeispielen näher erläutert. Dazu zeigen:

FIG 1 einen Frequenzumrichter mit Vorladewiderständen gemäß dem Stand der Technik,

FIG 2 einen Frequenzumrichter mit überbrückbaren Koppelkondensatoren gemäß einer Ausführungsform des erfindungsgemäßen Frequenzumrichters,

FIG 3 einen Frequenzumrichter gemäß einer weiteren Ausführungsform des erfindungsgemäßen Frequenzumrichters, die einen vollgesteuerten Hauptgleichrichter und einen weiteren Gleichrichter aufweist,

FIG 4 einen Frequenzumrichter gemäß einer weiteren Ausführungsform des erfindungsgemäßen Frequenzumrichters, die einen halbgesteuerten Hauptgleichrichter und einen weiteren Gleichrichter aufweist,

FIG 5 einen Frequenzumrichter gemäß einer weiteren Ausführungsform des erfindungsgemäßen Frequenzumrichters, die separate Filterkondensatoren aufweist,

FIG 6 einen Frequenzumrichter gemäß einer weiteren Ausführungsform des erfindungsgemäßen Frequenzumrichters, die Koppelkondensatoren aufweist, welche auch als Filterkondensatoren verwendbar sind,

FIG 7 einen Frequenzumrichter gemäß einer weiteren Ausführungsform des erfindungsgemäßen Frequenzumrichters, die ebenfalls Koppelkondensatoren aufweist, welche auch als Filterkondensatoren verwendbar sind,

FIG 8 ein Diagramm, in dem prinzipielle Verläufe von Spannungssignalen dargestellt sind, wie sie sich in dem Frequenzumrichter von FIG 2 während einer Vorladephase ergeben,

FIG 9 - 11 jeweils ein Diagramm mit Verläufen von Spannungs- und Stromsignalen, wie sie sich gemäß einer Simulation in dem Frequenzumrichter von FIG 2 für un— terschiedliche Zeitabschnitte einer Vorladephase ergeben, und

FIG 12 ein Diagramm mit Verläufen von Effektivwerten von Strom- und Spannungssignalen, wie sie sich gemäß einer Simulation für die Frequenzumrichter von FIG 1 und FIG 2 während einer Vorladephase ergeben.

Die Beispiele stellen bevorzugte Ausführungsformen der Erfindung dar.

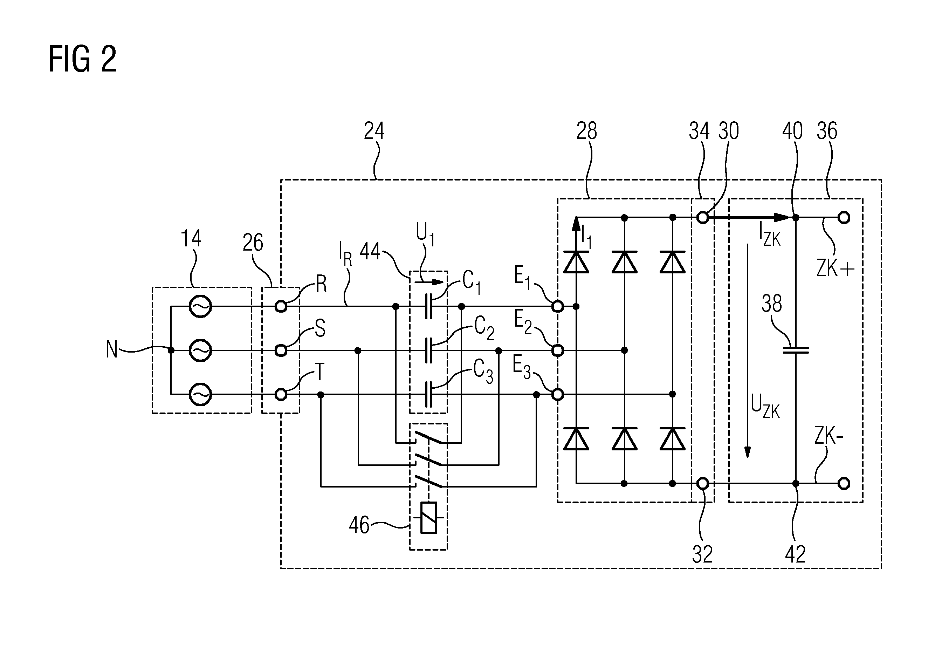

In FIG 2 ist ein Frequenzumrichter 24 gezeigt. Ein Netzanschluss 26 des Frequenzumrichters 24 ist über ein (nicht dargestelltes) Hauptschütz an ein Netz 14 angeschlossen. Das Netz 14 entspricht dem in FIG 1 gezeigten Netz mit derselben Bezugsnummer.

Bei dem Frequenzumrichter 24 erzeugt ein Gleichrichter 28 aus den Wechselspannungen der drei Netzphasen des Netzes 14 eine gleichgerichtete Spannung, hier Gleichspannung $U_{ZK}$ genannt. Bei dem in FIG 2 gezeigten Gleichrichter 28 wird die Gleichspannung $U_{ZK}$ mittels einer Vollweg-Gleichrichtung erzeugt. Der Gleichrichter 28 weist dazu drei Halbbrücken mit Dioden auf.

Die Gleichspannung $U_{ZK}$ liegt zwischen zwei Gleichspannungs-Anschlüssen 30, 32 eines Gleichspannungs-Ausgangs 34 des Gleichrichters an. An die Gleichspannungs-Anschlüsse 30, 32 ist jeweils eine Stromschiene ZK+, ZK- eines Zwischenkreises 36 des Frequenzumrichters 28 angeschlossen. Die Stromschienen ZK+, ZK- sind durch einen Zwischenkreiskondensator 38 kapazitiv miteinander gekoppelt. Anschlüsse 40, 42 des Zwischenkreiskondensators 38 sind dabei mit den Stromschienen ZK+, ZK- verbunden. Durch den Zwischenkreiskondensator 38 ist in dem Zwischenkreis 36 eine Zwischenkreiskapazität bereitgestellt.

Um den Zwischenkreiskondensator 38 in einer Vorladephase mit einem begrenzten Aufladestrom aufladen zu können, sind zwischen einzelnen Anschlusselementen R, S, T des Netzanschlusses 26, die mit Außen- oder Netzphasenleitern des Netzes 14 durch Schließen des Hauptschützes elektrisch verbunden werden können, und Wechselspannungs-Eingänge $E_1$, $E_2$, $E_3$ des Gleichrichters 28 Koppelkondensatoren $C_1$, $C_2$, $C_3$ in Serie geschaltet. Durch die Koppelkondensatoren $C_1$, $C_2$, $C_3$ ist eine Strombegrenzungseinrichtung 44 gebildet. Die Koppelkondensatoren $C_1$, $C_2$, $C_3$ können metallisierte Folienkondensatoren sein.

Die Strombegrenzungseinrichtung 44 kann durch Schließen eines Schützes 46 in einer Betriebsphase des Frequenzumrichters 24 überbrückt werden. Für den Fall, dass Leistungsfluss aus dem Netz 14 unterbrochen wird, öffnet sich das Schütz 46 selbständig. Wenn danach wieder ein Strom aus dem Netz 14 in den Gleichrichter 28 fließt, ist dieser zunächst über die Strombegrenzungseinrichtung 44 geführt, bis das Schütz 46 erneut geschlossen wird.

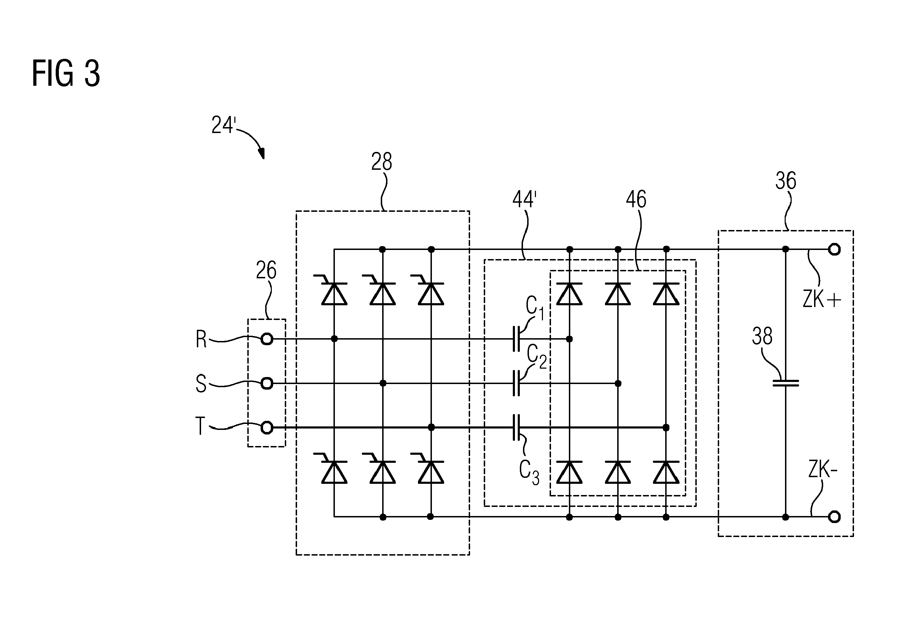

In den im Folgenden erläuterten FIG 3 bis 7 sind Elemente, die in ihrer Funktionsweise bereits erläuterten Elementen entsprechen, mit jeweils denselben Bezugzeichen versehen wie die entsprechenden, dann bereits erläuterten Elemente.

In FIG 3 ist ein weiterer Frequenzumrichter 24' gezeigt. Der Frequenzumrichter 24' weist zusätzlich zu einem Gleichrichter 28 einen weiteren Gleichrichter 46 auf. Dieser gehört zu einer Strombegrenzungseinrichtung 44'. Der Gleichrichter 26 ist für eine kleinere Nennleistung ausgelegt als der Gleichrichter 28. Wechselströme, die der Gleichrichter 46 über eine Netzanschluss 24 empfängt, werden durch Koppelkondensatoren $C_1$, $C_2$, $C_3$ begrenzt, die in der Strombegrenzungseinrichtung 44' dem Gleichrichter 46 in Serie vorgeschaltet sind.

In einer Vorladephase des Frequenzumrichters 24' sind Thyristoren des Gleichrichters 28 in einen sperrenden Zustand geschaltet. Ein Zwischenkreiskondensator 38 eines Zwischenkreises 36 wird dann über die Strombegrenzungseinrichtung 44 aufgeladen.

In einer Betriebsphase kann dann durch Betreiben des Gleichrichters 28 eine größere elektrische Leistung in den Zwischenkreis 36 übertragen werden. Die Strombegrenzungseinrichtung 44' muss dazu nicht überbrückt werden.

Indem bei dem Gleichrichter 28 des Frequenzumrichters 24' sowohl im in Hin- wie auch in Rückflusszweigen der Halbbrücken Thyristoren eingebaut sind, kann auch bei einem Erdschluss verhindert werden, dass ein Strom durch den Gleichrichter 28 unkontrolliert fließt.

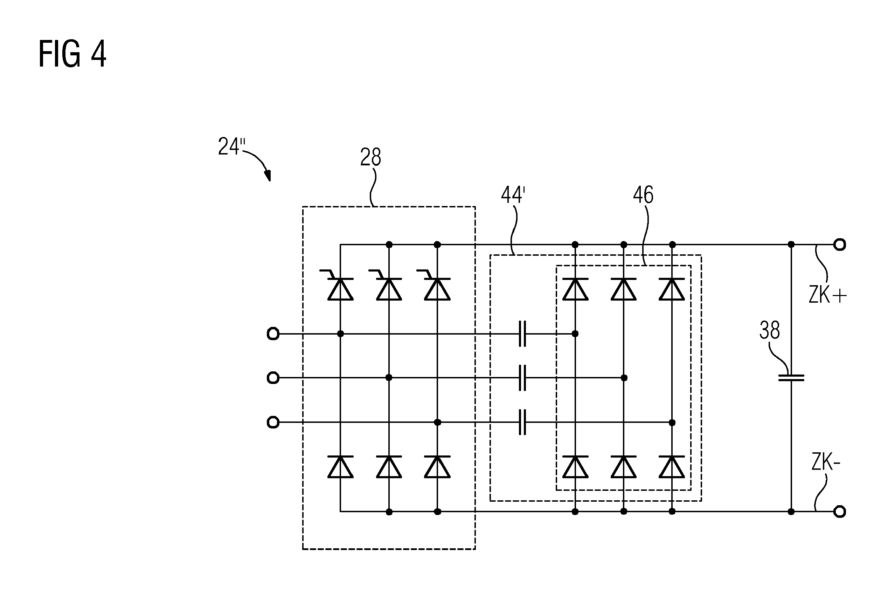

In FIG 4 ist ein Frequenzumrichter 24" gezeigt, der in seiner Bauweise mit dem Frequenzumrichter 24' vergleichbar ist.

Bei dem Frequenzumrichter 24" weist ein Gleichrichter 28 im Unterschied zum entsprechenden Gleichrichter des Frequenzumrichters 24' drei Thyristoren und drei Dioden auf. Der Frequenzumrichter 24" ist deshalb kostengünstiger herstellbar. Ein Schutz von Komponenten des Frequenzumrichter 24" vor einem zu großen Aufladestrom eines Zwischenkreiskondensators 38 ist dennoch wie bei dem Frequenzumrichter 24' durch Sperren der Thyristoren und Erzeugen einer Gleichspannung mittels eines Gleichrichters 46 einer Strombegrenzungseinrichtung 44' ermöglicht.

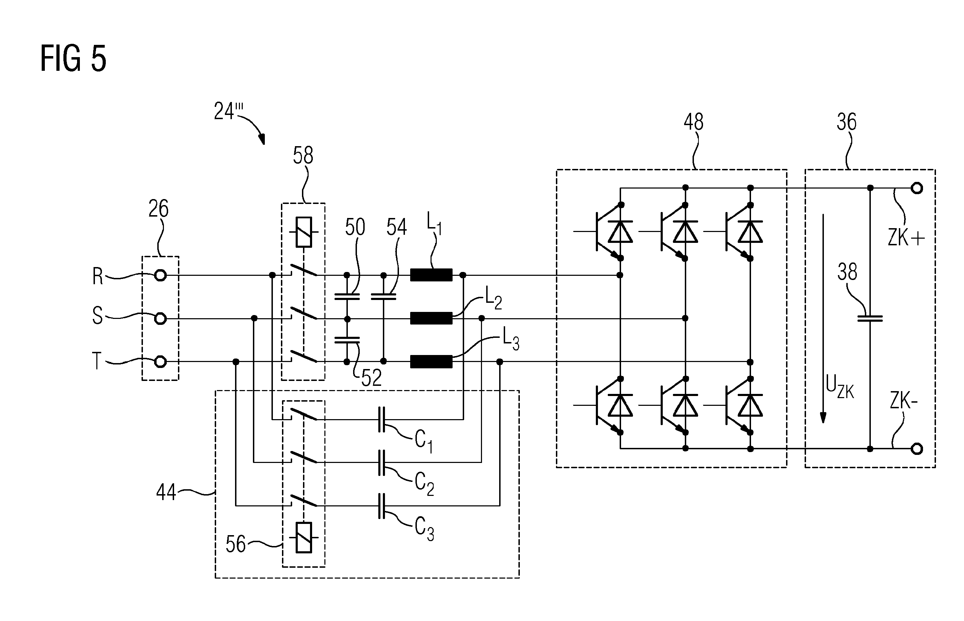

In FIG 5 ist ein Frequenzumrichter 24''' gezeigt, der einen aktiven Gleichrichter 48 aufweist, der als Hochsetzsteller betrieben werden kann. Im Hochsetzstellerbetrieb wird in einem Zwischenkreis 36 eine Gleichspannung $U_{ZK}$ erzeugt, deren Effektivwert unabhängig von Wechselspannungen ist, die zwischen Anschlusselementen R, S, T eines Netzanschlusses 26 anliegen. Für den Hochsetzstellerbetrieb sind einem Wechselspannungs-Eingang des Gleichrichters 48 Kommutierungsdrosseln $L_1$, $L_2$, $L_3$ und Filterkondensatoren 50, 52, 54 vorgeschaltet. Der Gleichrichter 48 ist auch rückspeisefähig, d.h. mit ihm kann aus der Gleichspannung $U_{ZK}$ eine Wechselspannung erzeugt und so Leistung zurück in ein Versorgungsnetz eingespeist werden.

Um die Stromstärke eines Aufladestrom eines Zwischenkreiskondensators 38 des Frequenzumrichters 24'' ' begrenzen zu können, ist in dem Frequenzumrichter 24'' ' eine Strombegrenzungseinrichtung 44 eingebaut. Diese kann durch Schließen eines Schützes 56 zugeschaltet werden. Zusätzlich kann ein Schütz 58 geöffnet werden, so dass Koppelkondensatoren $C_1$, $C_2$, $C_3$ der Strombegrenzungseinrichtung 44 nicht über die Kommutierungsdrosseln $L_1$, $L_2$, $L_3$ überbrückt sind.

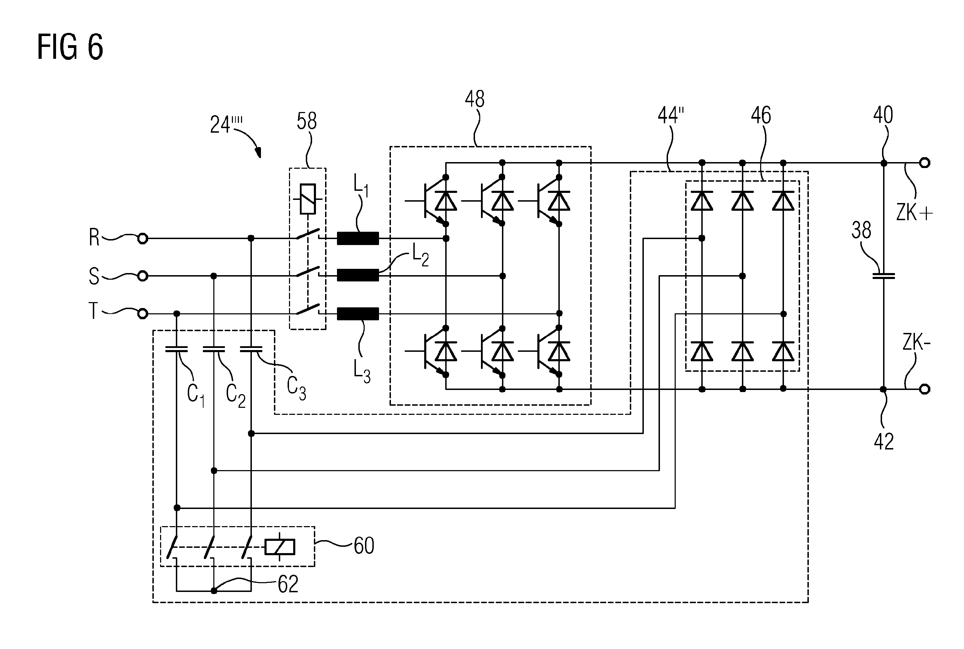

In FIG 6 ist ein Frequenzumrichter 24'' '' gezeigt, der einen aktiven Gleichrichter 48 wie der Frequenzumrichter 24'' ' aufweist. Eine Strombegrenzungseinrichtung 44" weist hier einen eigenen Gleichrichter auf. Koppelkondensatoren $C_1$, $C_2$, $C_3$ können durch Schließen eines Schützes 60 zu einer Sternschaltung zusammengeschaltet werden, so dass Anschlüsse der Koppelkondensatoren $C_1$, $C_2$, $C_3$ in einem Sternpunkt 62 miteinander verbunden sind. Dann ist der Gleichrichter 46 überbrückt, so dass kein Strom mehr durch ihn fließt. Entsprechend sind die Koppelkondensatoren $C_1$, $C_2$, $C_3$ dann auch nicht mehr in Serie zwischen Anschlusselemente R, S, T und Anschlüssen 40, 42 eines Zwischenkreiskondensators geschaltet. Stattdessen sind sie bei geschlossenem Schütz 60 zwischen die Anschlusselemente R, S, T geschaltet. Sie wirken dann als Filterkondensatoren ähnlich wie die Filterkondensatoren 50, 52, 54. Das Schütz 60 bleibt während einer Vorladephase geöffnet und wird zu Beginn einer Betriebsphase geschlossen.

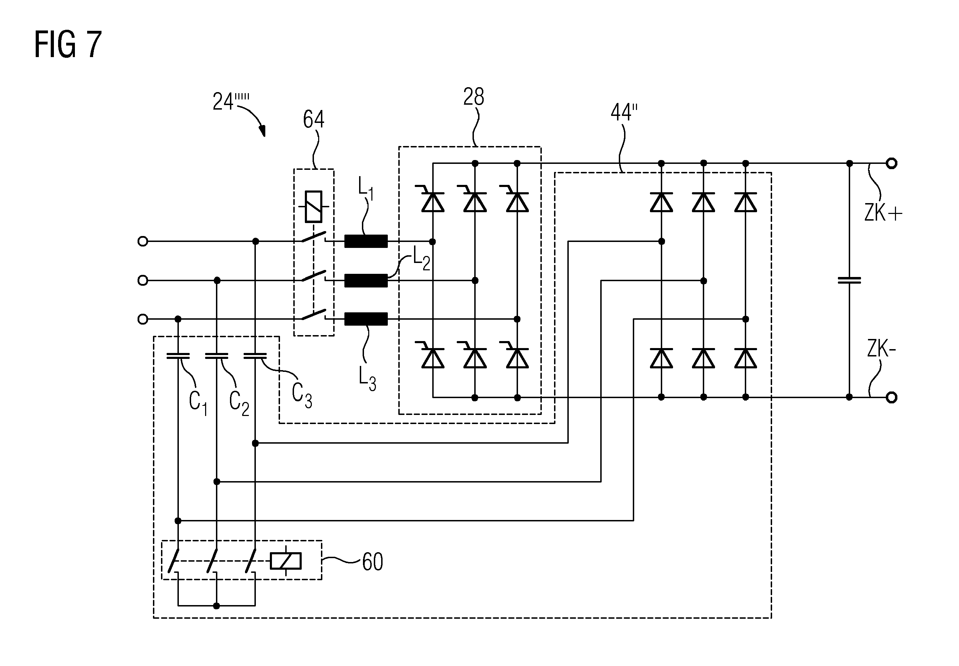

In FIG 7 ist ein Frequenzumrichter 24'' '' ' gezeigt, der einen aus Thyristoren gebildeten Gleichrichter 28 aufweist, ähnlich wie der Frequenzumrichter 24'. Auch für eine solchen Frequenzumrichter ist es möglich, eine Strombegrenzungseinrichtung 44' ' zu verwenden, bei der Koppelkondensatoren $C_1$, $C_2$, $C_3$ mittels eines Schützes 60 zum Filterkondensatoren umfunktioniert werden können. Durch Öffnen eines Schützes 64 wird vermieden, dass in der Vorladephase ein Blindstrom zwischen den Koppelkondensatoren $C_1$, $C_2$, $C_3$ und Kommutierungsdrosseln $L_1$, $L_2$, $L_3$ fließt. Es kann aber auch vorgesehen sein, das Schütz 64 während der Vorladephase geschlossen zu halten, um mittels der Kommutierungsdrosseln $L_1$, $L_2$, $L_3$ eine Blindleistungskompensation zu bewirken. Die Bauteile sind dann entsprechend dazu ausgelegt.

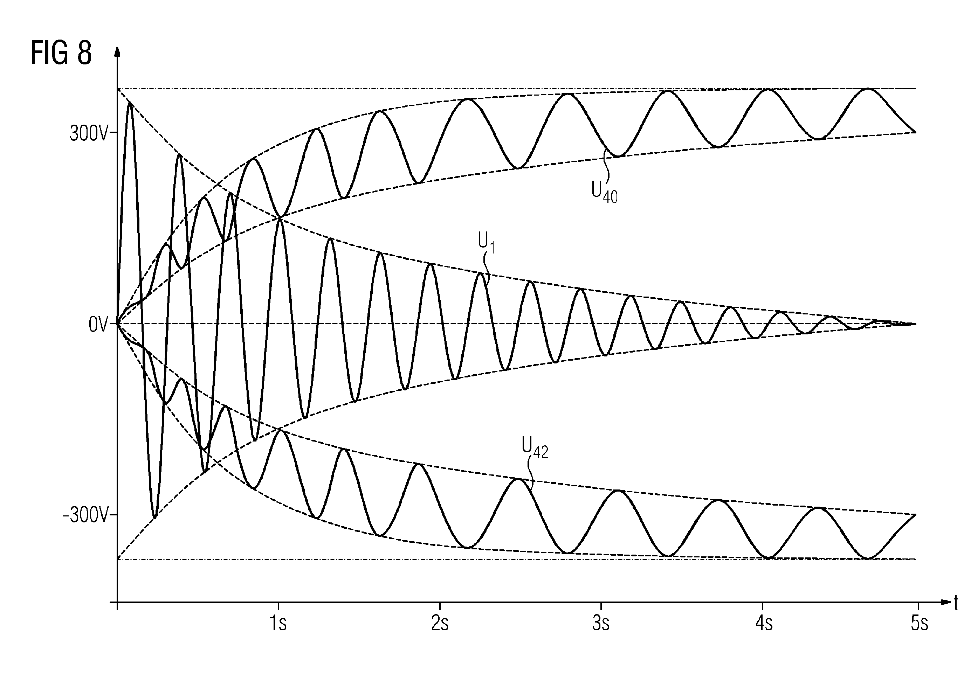

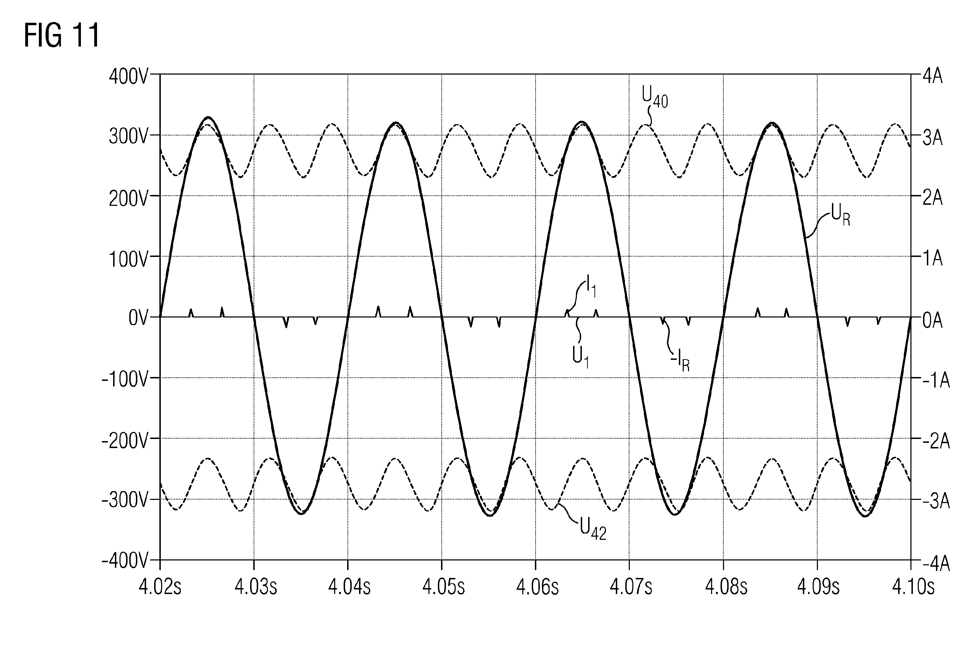

Im Folgenden ist für den Frequenzumrichter 24 anhand der FIG 8 bis 11 die Vorladung des Zwischenkreiskondensators 38, d. h. die Vorladephase, noch einmal näher erläutert.

Dazu sei angenommen, dass bei dem Netz 14, an das der Frequenzumrichter 24 angeschlossen ist, verkettete Netzspannungen (d.h. die jeweils zwischen zwei der Anschlusselemente R, S, T abfallenden Wechselspannungen) einen Effektivwert von 400 V aufweisen. Die Netzfrequenz betrage f = 50 Hz. Ferner sei der Frequenzumrichter 24 dazu ausgelegt, eine Nennleistung von 100 kW übertragen zu können. Die Koppelkondensatoren $C_1$, $C_2$, $C_3$ sollen eine Kapazität von C = 20 µF aufweisen. Ihr äquivalenter Reihenwiderstand (ESR - equivalent series resistance) betrage $R_{ESR}$ = 10 mΩ. Die Kommutierungskapazität des Zwischenkreiskondensators 38 betrage 4 mF.

In FIG 8 ist zu dem ganzen Ladevorgang gezeigt, welchen Verlauf über der Zeit t Spannungswerte einer Spannung $U_1$ über dem Koppelkondensator $C_1$ sowie Spannungswerte von Spannungen $U_{40}$ und $U_{42}$ aufweisen, von denen die Spannung $U_{40}$ eine zwischen dem Anschluss 40 und einem (in FIG 1 nicht dargestellten) Neutralleiter anliegend Spannung und die Spannung $U_{42}$ eine zwischen dem Anschluss 42 und dem Neutralleiter anliegende Spannung darstellt. Ein Potential des Neutralleiters ist gleich dem Potential eines Sternpunktes N des Netzes 14. Die Differenz der Spannungen $U_{40}$ und $U_{42}$ entspricht der Zwischenkreisspannung $U_{ZK}$.

Die in FIG 8 dargestellten Spannungen $U_1$, $U_{40}$, $U_{42}$ sind nur in ihrem prinzipiellen Verlauf dargestellt. Eine Frequenz, mit der sich die Verläufe sinusförmig über der Zeit t verändern, beträgt tatsächlich das Dreifache der Netzfrequenz von f = 50 Hz, also 150 Hz. Die in FIG 8 gezeigten Hüllkurven (gestrichelte Linien) zeigen, wie die Spannungen im Zwischenkreis 36 an den Stromschienen ZK+, ZK- vom Betrage her innerhalb von 3 s auf einen mittleren Wert von ca. 310 V ansteigen. In gleichem Maße sinken die Beträge der Extremwerte der Spannung $U_1$ über dem Kondensator $C_1$.

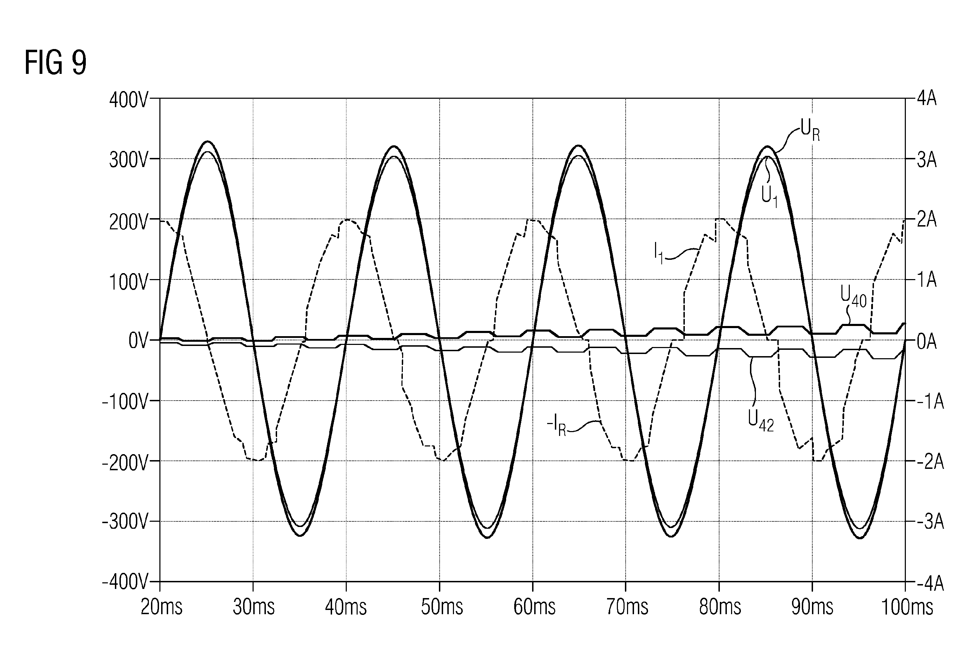

In FiG 9 bis 11 sind die Verläufe der Spannungen $U_1$, $U_{40}$, $U_{42}$ für einzelne Zeitabschnitte der Vorladephase noch einmal dargestellt. Zusätzlich sind noch Verläufe einer Spannung $U_R$, die zwischen dem Anschlusselement R und dem Sternpunkt N anliegt, eines Strangstromes $I_R$ durch den Koppelkondensator $C_1$ und eines Stromes $I_1$, der vom Koppelkondensator $C_1$ in die Stromschiene ZK+ fließt, gezeigt. Der Strangstrom $I_R$ ist negiert als $—I_R$ dargestellt.

FIG 9 zeigt den Moment des Einschaltens. Der Strom $I_1$ eilt der Phasenspannung $U_R$ um 90° voraus und ist bei der anfänglich geringen Zwischenkreisspannung nahezu sinusförmig. Der Effektivstrom $I_{R,eff}$ durch den Kondensator $C_1$ beträgt:

$$I_{R,eff} = U_R \, \omega C = 230 \text{ V } 2 \, \pi \, f \, 20 \, \mu F = 1{,}44 \text{ A (root mean square)}.$$

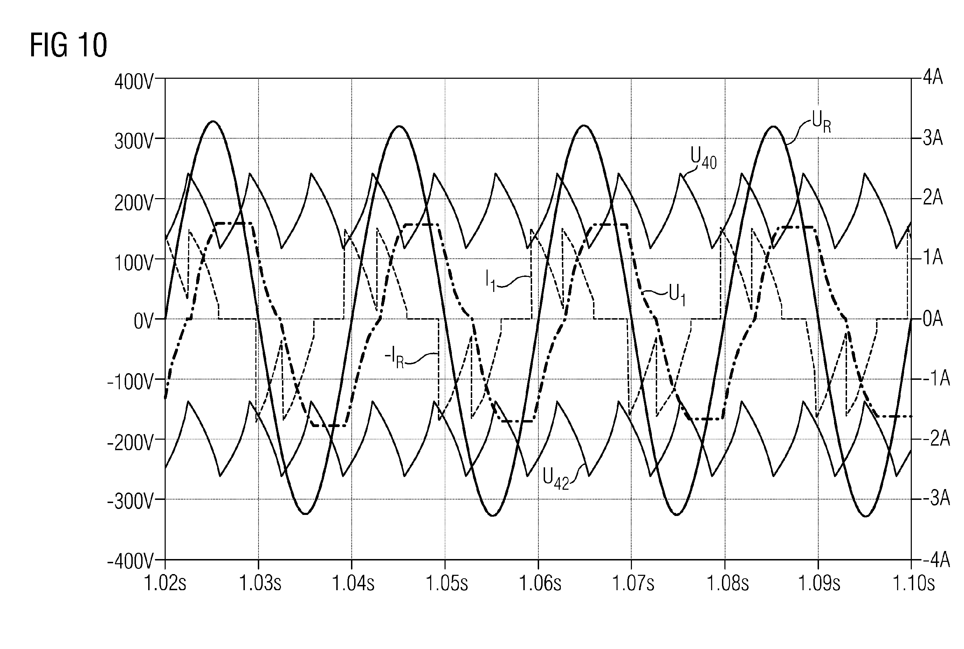

Nach einer Sekunde (siehe FIG 10) ist der Zwischenkreiskondensator 38 bereits auf $U_{ZK}$ = 390 V aufgeladen. Der Effektivstrom durch $C_1$ ist auf 0,8 A abgefallen. Die Spannung am Koppelkondensator $C_1$ fällt. Nach fünf Sekunden (siehe FIG 8) ist der Zwischenkreiskondensator 38 vollständig aufgeladen. Der Koppelkondensator $C_1$ führt keinen Strom, über ihm fällt keine nennenswerte Spannung ab. Zu diesem Zeitpunkt ist es ohne Risiko möglich, die Strombegrenzungseinrichtung 44 durch Schließen des Schützes 46 zu überbrücken.

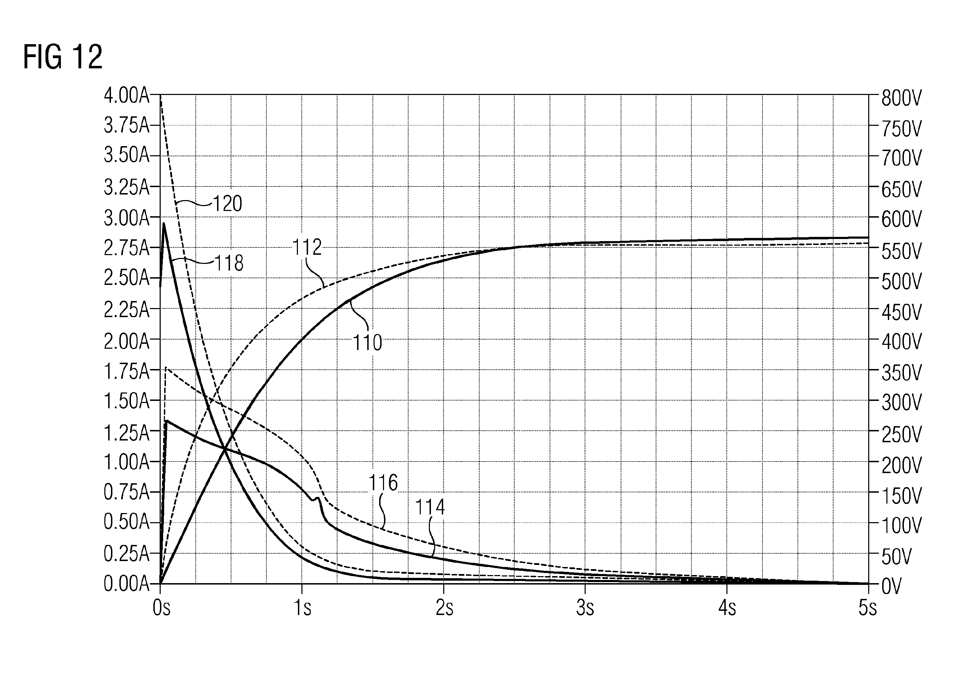

In FIG 12 sind zum Vergleich Verläufe von Effektivwerten der Zwischenkreisspannung $U_{ZK}$, des Aufladestromes $I_{ZK}$ und des Strangstromes $I_R$ gezeigt, wie sie sich während einer Vorladephase zum einen bei dem Frequenzumrichter 10 (Stand der Technik) und zum anderen bei dem Frequenzumrichter 24 ergeben.

Ein Verlauf 110 des Effektivwerts der Zwischenkreisspannung $U_{ZK}$ bei dem Frequenzumrichter 24 unterscheidet sich nicht wesentlich von dem entsprechenden Verlauf 112 des Effektivwerts von $U_{ZK}$ beim Frequenzumrichter 10. Der Zwischenkreiskondensator wird also bei den beiden Frequenzumrichtern 10, 24 in nahezu derselben Zeit aufgeladen. Mittels der kapazitiven Kopplung ist es also möglich, den Zwischenkreiskondensator genauso schnell aufzuladen, wie es über Vorladewiderstände möglich ist.

Ein Verlauf 114 des Effektivwerts des Strangstromes $I_R$ und ein Verlauf 116 des Effektivwerts des Aufladestromes $I_{ZK}$ weist bei dem Frequenzumrichter 24 dagegen einen deutlich kleineren Höchstwert auf als entsprechende Verläufe 118 ($I_R$) bzw. 120 ($I_{ZK}$) bei dem Frequenzumrichter 10.

Bei dem Frequenzumrichter 10 weisen die Vorladewiderstände $R_1$, $R_2$, $R_3$ in dem gezeigten Beispiel einen Widerstandswert von R = 68 $\Omega$ auf. Im Falle eines Kurzschlusses im Zwischenkreis 18 müsste $R_1$ bei einer Vorladung dauerhaft eine Leistung

$$P_{R1} = U_R^2 \, / \, R = (230 \text{ V})^2 \, / \, 68 \, \Omega = 778 \text{ W}$$

aufnehmen können. Der Vorladewiderstand würde dabei stark erhitzt. Für eine solche Leistung kann er nicht mit wirtschaftlich vertretbarem Aufwand robust genug ausgelegt werden.

In dem Koppelkondensator $C_1$ wird dagegen in dem gleichen Fall nur eine Leistung

$$P_{C1} = I_R^2 \, R_{ESR} = (U_R \, \omega C)^2 \, R_{ESR} = (1{,}44 \text{ A})^2 \, 10 \text{ m}\Omega = 21 \text{ mW}$$

umgesetzt. Es kommt daher auch im Falle eines Kurzschlusses zu keiner signifikanten Erhitzung der Strombegrenzungseinrichtung 44.

Dieser Vorteil kann sogar mit handelsüblichen Folienkondensatoren erzielt werden. Sie sind mit der ausreichenden Spannungs- und Strombelastbarkeit und dem angegebenen $R_{ESR}$ erhältlich. Damit kann auch ein Frequenzumrichter mit einer Nennleistung von 100 kW wirtschaftlich günstig bereitgestellt werden.

Auch vom Bauvolumen her ergibt sich ein Vorteil. Zwar weist ein Widerstand wie der Vorladewiderstand $R_1$ nur ein Volumen von 6,5 cm$^3$ auf. Hierbei sind aber weder das Bauvolumen der Kühlvorrichtungen noch der zum Abführen der erhitzten Luft nötige Freiraum berücksichtigt. Ein Folienkondensator, wie er als Koppelkondensator $C_1$ verwendet werden kann, weist insgesamt ein Volumen von 57 cm$^3$ auf, was wegen der möglichen kompakten Anordnung der Bauteile insgesamt zu einem geringeren Gesamtvolumen der Strombegrenzungseinrichtung führen kann. Zudem ergeben sich auch geringere Herstellungskosten.

Bei geschickter Bauteilanordnung können mit einem zusätzlichen Schaltelement (in den Beispielen ist dies das Schütz 60) die Koppelkondensatoren $C_1$, $C_2$, $C_3$ auch als Filterkondensatoren eingesetzt werden. Eine (in den Figuren nicht dargestellte) Entladungsvorrichtung aus Widerständen, die hierfür zum Entladen der Kondensatoren beim Umschalten notwendig ist, stellt kein technisches oder wirtschaftliches Problem dar.

Insgesamt ist durch die Beispiele gezeigt, wie ein wirksamer Schutz der Frequenzumrichter für die folgenden Fehlerfälle bereitgestellt ist:

- **-** einen Zwischenkreiskurzschluss,
- **-** einen Erdschluss im Zwischenkreis oder in einer mit diesem gekoppelten elektrischen Maschine,
- **-** einen Betrieb mit zu vielen Wechselrichtern oder mit Wechselrichtern, die eine zu große Nennleistung aufweisen, und
- **-** einen Nachladevorgang nach einem kurzzeitigen Netzausfall.

Indem in der Strombegrenzungseinrichtung auch bei einem Kurzschlussstrom nur eine geringe Wirkleistung umgesetzt wird, wird diese nicht zerstört.

**Patentansprüche**

1. Frequenzumrichter (24 bis 24" " ') zum Betreiben einer elektrischen Maschine an einem elektrischen Netz (14), umfassend:

   - einen Netzanschluss (26) zum Anschließen des Frequenzumrichters (24 bis 24''''') an das Netz (14),
   - einen mit dem Netzanschluss (26) verbundenen Gleichrichter (28,48) zum Umwandeln einer Wechselspannung ($U_R$) des Netzes (14) in eine gleichgerichtete Spannung ($U_{ZK}$),
   - einen an einen Gleichspannungs-Ausgang (34) des Gleichrichters (28,48) angeschlossenen Zwischenkreis (36) mit zumindest einem Zwischenkreiskondensator (38), und
   - eine Strombegrenzungseinrichtung (44,44',44'') zum Begrenzen einer Stromstärke eines aus dem Netz (14) in den Zwischenkreis (36) fließenden Stroms ($I_{ZK}$),
   **dadurch gekennzeichnet, dass**
   - die Strombegrenzungseinrichtung (44, 44', 44'') dazu ausgelegt ist, den Zwischenkreis (36) zum Begrenzen des Stroms ($I_{ZK}$) mit dem Netzanschluss (26) kapazitiv zu koppeln.

2. Frequenzumrichter (24 bis 24''''') nach Anspruch 1, **dadurch gekennzeichnet, dass** die Strombegrenzungseinrichtung (44,44') zumindest einen Koppelkondensator ($C_1$, $C_2$, $C_3$) aufweist und die Strombegrenzungseinrichtung (44,44') dazu ausgelegt ist, zur Strombegrenzung den zumindest einen Koppelkondensator ($C_1$, $C_2$, $C_3$) in Serie zwischen ein Anschlusselement (R,S,T) des Netzanschlusses (26) und einen Anschluss (40,42) des Zwischenkreiskondensators (38) zu schalten.

3. Frequenzumrichter (24, 24''', 24'''', 24''''') nach Anspruch 1 oder 2, **dadurch gekennzeichnet, dass** die Strombegrenzungseinrichtung (44,44'') oder ein Teil derselben wahlweise überbrückbar ist.

4. Frequenzumrichter (24, 24''') nach einem der vorhergehenden Ansprüche, **dadurch gekennzeichnet, dass** die Strombegrenzungseinrichtung (44) zwischen den Netzanschluss (26) und den Gleichrichter (28,48) geschaltet ist.

5. Frequenzumrichter (24',24'',24'''',24''''') nach einem der vorhergehenden Ansprüche, **gekennzeichnet durch** einen weiteren Gleichrichter (46), welcher Bestandteil der Strombegrenzungseinrichtung (44',44'') ist.

6. Frequenzumrichter (24" " ,24" " ') nach einem der vorhergehenden Ansprüche, **dadurch gekennzeichnet, dass** die Strombegrenzungseinrichtung (44'') eine Schalteinrichtung (60) aufweist, die dazu ausgelegt ist, Koppelkondensatoren ($C_1$, $C_2$, $C_3$) der Strombegrenzungseinrichtung (44'') wahlweise als Filterkondensatoren zwischen Netzphasenleiter (R,S,T) des Frequenzumrichters zu schalten, wobei die Koppelkondensatoren hierbei bevorzugt in einer Stern- oder Dreieckschaltung miteinander verschaltbar sind.

7. Verfahren zum Betreiben eines Frequenzumrichters gemäß einem der vorhergehenden Ansprüche, wobei bei dem Verfahren der Zwischenkreiskondensator in einer Vorladephase aufgeladen wird und hierzu der Zwischenkreiskondensator kapazitiv mit dem Netz gekoppelt wird.

8. Verfahren nach Anspruch 7, **dadurch gekennzeichnet, dass** in einer Betriebsphase zum Betreiben der elektrischen Maschine eine galvanische Verbindung zwischen dem Zwischenkreiskondensator und dem Netz bereitgestellt wird.

9. Verfahren nach Anspruch 7 oder 8, **dadurch gekennzeichnet, dass** in einer Betriebsphase nach einer Unterbrechung eines von dem Gleichrichter aus dem Netz empfangenen elektrischen Leistungsflusses der Zwischenkondensator in einer Nachladephase wieder aufgeladen wird und hierbei eine Stromstärke des Aufladestroms mittels der Strombegrenzungseinrichtung begrenzt wird.

# FIG 1

(Stand der Technik)

EP 2 533 409 A1

FIG 2

EP 2 533 409 A1

**FIG 3**

FIG 4

EP 2 533 409 A1

FIG 5

FIG 6

EP 2 533 409 A1

FIG 7

FIG 8

FIG 9

FIG 10

FIG 11

EP 2 533 409 A1

FIG 12

EP 2 533 409 A1

Europäisches Patentamt

European Patent Office

Office européen des brevets

**EUROPÄISCHER RECHERCHENBERICHT**

Nummer der Anmeldung

EP 11 16 9490

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 04 015 A1 (ASCENTRONIC GERAETEBAU GMBH [DE]) 5. August 1999 (1999-08-05) * Zusammenfassung * * Abbildungen 1,2,3 * * Spalte 3, Zeile 59 - Spalte 6, Zeile 67 * ----- | 1-5,7-9 | INV. H02M5/458 H02M1/36 |
| X | GB 2 300 982 A (ENI INC [US]) 20. November 1996 (1996-11-20) * Abbildung 6 * * Seite 5, Zeile 20 - Seite 6, Zeile 22 * ----- | 1-4,7-9 | |

RECHERCHIERTE SACHGEBIETE (IPC)

H02M

Der vorliegende Recherchenbericht wurde für alle Patentansprüche erstellt

| Recherchenort | Abschlußdatum der Recherche | Prüfer |
|---|---|---|
| Den Haag | 18. Juni 2012 | Lorenzo Barreiro, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 16 9490

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2012

| Im Recherchenbericht angeführtes Patentdokument | Datum der Veröffentlichung | Mitglied(er) der Patentfamilie | Datum der Veröffentlichung |
|---|---|---|---|
| DE 19804015 A1 | 05-08-1999 | KEINE | |
| GB 2300982 A | 20-11-1996 | DE 19620019 A1<br>GB 2300982 A<br>JP 9037454 A<br>US 5627738 A | 21-11-1996<br>20-11-1996<br>07-02-1997<br>06-05-1997 |

EPO FORM P0461

Für nähere Einzelheiten zu diesem Anhang : siehe Amtsblatt des Europäischen Patentamts, Nr.12/82